# EUROPÄISCHE PATENTSCHRIFT

(11) **EP 3 197 633 B1**
(45) Veröffentlichungstag und Bekanntmachung des Hinweises auf die Patenterteilung: **01.05.2019**
(21) Anmeldenummer: 15777863.0
(22) Anmeldetag: 01.09.2015
(51) Int. Cl.: B23P 15/00, B21D 31/00, B23P 23/04, B23K 26/342, B23K 37/02, B23K 26/00, B23K 26/08, B23K 26/14

(54) **VERFAHREN UND VORRICHTUNG ZUR KOMBINIERTEN HERSTELLUNG VON BAUTEILEN MITTELS INKREMENTELLER BLECHUMFORMUNG UND ADDITIVER VERFAHREN IN EINER AUFSPANNUNG**
METHOD AND DEVICE FOR THE COMBINED PRODUCTION OF COMPONENTS BY MEANS OF INCREMENTAL SHEET FORMING AND ADDITIVE METHODS IN ONE CLAMPING SETUP
PROCÉDÉ ET DISPOSITIF DE PRODUCTION COMBINÉE D'ÉLÉMENTS AU MOYEN D'UN FORMAGE INCRÉMENTAL DE TÔLES ET DE PROCÉDÉS ADDITIFS EN UNE SEULE PASSE

(30) Priorität: 22.09.2014 DE 102014014202
(43) Veröffentlichungstag der Anmeldung: 02.08.2017
(73) Patentinhaber: Technische Universität Dortmund, 44227 Dortmund (DE)
(72) Erfinder: Hölker-Jäger, Ramona, 46286 Dorsten (DE); Ben Khalifa, Nooman, 44227 Dortmund (DE); Tekkaya, A. Erman, 44227 Dortmund (DE)
(74) Vertreter: Schneider, Uwe
(86) Internationale Anmeldenummer: PCT/DE2015/000442
(87) Internationale Veröffentlichungsnummer: WO 2016/045651

(56) Entgegenhaltungen:
- EP-A1- 1 977 842
- WO-A1-2013/079725
- US-A1- 2009 250 834

## Beschreibung

Die Erfindung betrifft ein Verfahren zur Herstellung von Bauteilen mittels inkrementeller Blechumformung und additiver Verfahren in einer Aufspannung gemäß Oberbegriff des Anspruches 1 und eine Vorrichtung gemäß Oberbegriff des Anspruches 17.

Ein solches Verfahren und eine solche Vorrichtung sind aus der WO 2013/079725 A1 bekannt.

Heutzutage werden Blechbauteile für unterschiedlichste Anwendungen auch auf sehr unterschiedlichen Wegen hergestellt. Zu den meistverwendeten Herstellungsverfahren zählen beispielsweise konventionelle Verfahren wie etwa das Stanzen, das Tiefziehen und das Streckziehen. Diese Verfahren erfordern den Einsatz von häufig aufwendig gestalteten Werkzeugen, die eine hohe Geometriebindung aufweisen und entsprechend teuer und zeitaufwändig hergestellt werden müssen. Bei kleinen Losgrößen jedoch sind diese Umformverfahren aufgrund der hohen Fertigungskosten für Maschinen und Anlagen sowie der zeitintensiven Herstellung der Werkzeuge weniger geeignet. Deshalb wurden in den letzten Jahren neue Umformverfahren entwickelt, bei denen das Blech die gewünschte Endkontur in vielen kleinen Umformschritten erhält. Diese Umformverfahren werden insgesamt als sog. inkrementelle Umformverfahren bezeichnet. Diese Verfahren verbindet, dass die zum Einsatz benötigten Umformkräfte sehr viel geringer als bei den konventionellen Umformverfahren sind.

Durch die nur noch lokal wirkenden Werkzeuge und die entsprechen verringerten Umformkräfte kann ein derartiger Verfahren auch auf handelsüblichen CNC-Fräsmaschinen ausgeführt werden. Die Umformung des Blechs erfolgt dabei mittels mindestens einem, an einen Fingerfräser erinnernden, üblicherweise zylindrischen Umformwerkzeug mit einer kugeligen Wirkfläche, das oder die sich CNC-gesteuert auf Bahnen über den Blechrohling bewegen und diesen sukzessive umformen. Dieses Verfahren erlaubt somit eine schnellere Umsetzung einer Produktidee in einen Prototypen und eignet sich daher besonders zur Herstellung von Blechteilen in Kleinserien oder für den Prototypeneinsatz.

Nachteilig an dieser inkrementellen Blechumformung ist das auf weitgehend blechförmige Bauteile beschränkte Bauteilspektrum der damit herstellbaren Bauteile. Zwar ist die herstellbare Blechgeometrie der Bauteile durch die inkrementelle Herstellung sehr flexibel und vielgestaltig, findet jedoch immer da ihre Grenzen, wenn das herzustellende Bauteil abschnittsweise oder lokal größere Materialanhäufungen erforderlich macht, etwa für die Herstellung von z.B. Gewinden, Rippen oder sonstigen Form- oder Funktionselementen. Konventionell werden derartige Form- oder Funktionselemente häufig nach der Blechumformung durch Anschweißen von entsprechenden Normteilen oder speziell gefertigten Bauteilen an dem umgeformten Blechbauteil angebracht und anschließend nachbearbeitet, z.B. wird in einem aufgeschweißten Gewindeauge ein Loch gebohrt und ein Gewinde eingebracht. Derartige Bearbeitungen des umgeformten Blechbauteils erfordern dabei einen oder mehrere Bearbeitungsschritte, die üblicherweise auf verschiedenen Maschinen oder Einrichtungen durchgeführt werden müssen. Im Beispiel der Herstellung eines Gewindeauges muss in einer Schweißeinrichtung das Gewindeauge angeschweißt und anschließend in einer spanenden Bearbeitungsstation das Bohrloch und das Gewinde eingebracht und ggf. noch die Anlagefläche für das anzuschraubende Bauteil passend gefräst werden. Dieser Bearbeitungsgang erfordert aufwändige Handhabung des umgeformten Blechbauteils zum Einbringen in die jeweilige Bearbeitungsstation und verursacht leicht Fehler beim Aufspannen und Ausrichten des umgeformten Blechbauteils sowie daraus resultierende Fertigungsungenauigkeiten.

Die sich momentan sehr dynamisch weiter entwickelnden sog. 3-D-Druckverfahren sind derzeit ebenfalls noch primär im Bereich des Rapid Prototyping angesiedelt und bieten die Möglichkeit, mittels unterschiedlicher Techniken und Materialien Werkstücke auf additive Weise herzustellen. Damit erlauben sie völlig neue Ansätze und Gestaltungsmöglichkeiten zur Herstellung von Bauteilen auch in Kleinserien, wobei die herstellbare Bauteilgeometrie sehr vielfältig sein kann. Allerdings liegt der Schwerpunkt der additiven Herstellverfahren nicht im Bereich vorrangig blechförmiger Bauteile, sondern eher im Bereich von Bauteilen mit zumindest lokalen Materialanhäufungen.

Hierbei kommen sehr unterschiedliche Techniken und Materialien zum Einsatz, um das Werkstück aus z.B. pulverförmigen oder strangförmigen Vormaterialien punkt-, schicht- oder lagenweise aufzubauen. Hierbei bewegt sich in der Regel ein Bearbeitungskopf entlang der herzustellenden Werkstückkontur und beeinflusst dabei das Vormaterial punktuell derart, dass es die gewünschte Form des Werkstücks in diesem Punkt annimmt und anschließend beibehält. Der Bearbeitungskopf muss dabei teilweise komplizierte geometrische Muster abarbeiten, wozu aufgrund der Bewegungskinematik des 3-D-Druckers teilweise sehr zeitaufwändige Bearbeitungsoperationen notwendig sind. Ein insbesondere für die Herstellung metallischer Bauteile bekanntes Verfahren ist das Laserauftragsschweißen, mit dem auch auf metallischen Basisteilen metallische, additiv hergestellte Bestandteile appliziert werden können.

Problematisch an dieser additiven Herstellung von metallischen Bauteilen ist die erreichbare Oberflächengestaltung, die häufig den zumindest punktuell geforderten Oberflächeneigenschaften an das Fertigbauteil nicht genügen. So bilden sich z.B. beim Laserauftragsschweißen recht raue Oberflächen, die als Funktionsflächen z.B. zur Anbringung von Funktionsbauteilen nicht ausreichend glatt und maßgenau sind und daher nach dem Laserauftragsschweißen nachbearbeitet werden müssen. Es ist daher schon bekannt geworden, nach dem Laserauftragsschweißen eine z.B. spanende Nachbearbeitung derartiger Flächen vorzunehmen, insbesondere auch in der gleichen Maschine bzw. der gleichen Aufspannung wie beim Laserauftragsschweißen. Hierzu ist die Integration von Laserauftragsschweißen und Fräsen in einer Maschine bekannt geworden (Fa. DMG MORI, Maschine LASERTEC 65 AM). Auf dieser Maschine werden Bauteile additiv durch Laserauftragsschweißen hergestellt und anschließend nach einem Werkzeugwechsel lokal durch Fräsoperationen des additiv gefügten Bauteils in der gleichen Aufspannung nachbearbeitet, wobei die Bearbeitungsschritte nur nacheinander und nicht zeitgleich erfolgen können.

Aufgabe der vorliegenden Erfindung ist es daher, die Herstellung auch von zumindest teilweise blechförmigen Bauteilen mittels einer Kombination von inkrementeller Blechumformung und additiver Verfahren einfach und unter Gewährleistung hoher Bearbeitungsgenauigkeiten zu ermöglichen.

Die Lösung der erfindungsgemäßen Aufgabe ergibt sich hinsichtlich des Verfahrens aus den kennzeichnenden Merkmalen des Anspruches 1 und hinsichtlich der Vorrichtung aus den Merkmalen des Anspruchs 17 jeweils in Zusammenwirken mit den Merkmalen des zugehörigen Oberbegriffes. Weitere vorteilhafte Ausgestaltungen der Erfindung ergeben sich aus den Unteransprüchen.

Die Erfindung betreffend das Verfahren geht aus von einem Verfahren zur Herstellung von Bauteilen mittels inkrementeller Blechumformung und additiver Verfahren, insbesondere mittels Laserauftragsschweißen, bei dem das Bauteil ausgehend von einem blechförmigen Ausgangsmaterial mittels inkrementeller Blechumformung zumindest lokal in eine verformte Fertigteilgeometrie gebracht wird, wobei vor und/oder währenddessen mittels additiver Verfahren, insbesondere mittels Laserauftragsschweißen, zumindest lokal Materialanhäufungen an dem blechförmigen Ausgangsmaterial und/oder an der verformten Fertigteilgeometrie in derselben Aufspannung des Bauteils angebracht und/oder mit dieser verbunden werden. Das Verfahren ermöglicht dabei, sowohl kleine als auch große und großflächige komplexe metallische Bauteile in einem Schritt bzw. in einer Maschine herzustellen, diese inkrementell umzuformen und vorab, gleichzeitig oder im Anschluss hieran additive Herstellverfahren wie etwa das Laserauftragsschweißen einzusetzen, um geometrisch komplexe Formelemente auch auf gekrümmte Oberflächen blechförmiger Ausgangswerkstoffe additiv auftragen zu können. Dies kann alles ohne ein Umspannen und in der gleichen Maschine ausgeführt werden, wodurch die Bearbeitungsgenauigkeit steigt und der Aufwand für das Umspannen des Werkstücks auf verschiedene Maschinen entfallen kann. Durch die Kombination der an sich bekannten Herstellungsverfahren der inkrementellen Blechumformung und eines additiven Herstellverfahrens lassen sich die Vorzüge beider Herstellverfahren in einer Maschine und in einem Verfahrensablauf kombinieren und erweitern das Produktionsspektrum und die Einsetzbarkeit derart hergestellter Werkstücke. Auch erhöht sich die Wirtschaftlichkeit entscheidend. So kann ein überwiegend blechartiges Werkstück z.B. aus einem ebenen Rohmaterial durch die inkrementelle Blechumformung in die gewünschte dreidimensional gekrümmte Fertigteilgeometrie gebracht werden, ohne dass hohe Herstellkosten für Stanzwerkzeuge anfallen, wobei vorab, zeitgleich oder anschließend an die inkrementelle Blechumformung gezielt in den Bereichen des blechartigen Werkstücks durch additive Herstellverfahren Materialanhäufungen angebracht werden können, wo diese funktional benötigt werden. Z.B. können nach der dreidimensionalen Verformung des blechartigen Ausgangsmaterials in besonders hoch mechanisch belasteten Stellen des herzustellenden Bauteils additiv Verstärkungsrippen oder als Verdickungen wirkende Materialanhäufungen aufgebracht werden, wodurch das herzustellende Bauteil gezielt verstärkt wird und dadurch insgesamt zielgerichteter als bei konventioneller Herstellung ausgelegt werden kann. Weiterhin kann z.B. an dem blechartigen Ausgangsmaterial gezielt dort, wo weitere Bauteile befestigt werden sollen, eine entsprechende Materialanhäufung etwa in Form einer Anschraubkonsole oder eines Auges vorgesehen werden, um z.B. ein Gewinde mit ausreichender Gewindelänge einbringen zu können, die das blechartige Ausgangsmaterial gar nicht ermöglichen würde. Hierdurch können etwa herkömmliche Schweißbearbeitungen zum Anschweißen derartiger Konsolen oder Augen vermieden werden. Auch ist es damit möglich, anstatt zu gießender Ausgangsmaterialien, die ebenfalls aufwändige Vorfertigung durch das Gießen erfordern, einfache blechartige Ausgangsmaterialien zu verwenden und insgesamt sogar leichtbauartiger zu konstruieren.

In weiterer Ausgestaltung des Verfahrens ist es denkbar, dass vor und/oder während und/oder anschließend zu der Anwendung additiver Verfahren an dem blechförmigen Ausgangsmaterial eine spanende und/oder umformende Nachbearbeitung der lokalen Materialanhäufungen, insbesondere zur Erhöhung Maß- und Formgenauigkeit der lokalen Materialanhäufungen, oder der umgeformten blechförmigen Abschnitte des Bauteils durchgeführt wird. Insbesondere die verfahrensmäßig additiv hergestellten Materialanhäufungen entsprechen häufig nicht den Anforderungen an die Oberflächengestaltung bzw. die Maßhaltigkeit, die etwa bei spanender Bearbeitung aus einem Vollmaterial üblich sind. Es ist aber auch denkbar, dass die nur inkrementell umgeformten Bereiche des Werkstücks einer z.B. spanenden Nachbearbeitung bedürfen, etwa um passgenaue Montagen zu ermöglichen oder vorgegebene Toleranzen einzuhalten. Hierfür ist es denkbar, dass vor und/oder während und/oder anschließend zu der Anwendung additiver Verfahren eine mechanische Nachbearbeitung des Werkstücks oder von Teilen davon durch Glatt- und/oder Festwalzen oder übliche spanende Bearbeitungen wie etwa das Fräsen oder das Bohren etc. erfolgt. Somit lassen sich z.B. die durch den additiven Fertigungsprozess erzeugten rauen Oberflächen der lokalen Materialanhäufungen glätten oder passgenau bearbeiten.

Von besonderem Vorteil ist es für die konstruktive und gewichtsoptimierte Auslegung des Werkstücks, wenn die lokalen Materialanhäufungen als Funktions- und/oder Formelemente an der Oberfläche des blechförmigen Ausgangsmaterials und/oder an der verformten Fertigteilgeometrie des herzustellenden Bauteils angeordnet werden. Hierdurch kann schon bei der Fertigung gezielt nur an den Stellen des blechförmigen Ausgangsmaterials Material additiv in Form einer Materialanhäufung vorgesehen werden, an denen dieses Material funktional oder festigkeitsbedingt benötigt wird. Dies ermöglicht eine gezielte leichtbaugerechte Auslegung des Bauteils, die sich durch die erfindungsgemäße Kombination der Fertigungsverfahren kostengünstig und genau in einer Aufspannung umsetzen lässt. Hierbei ist es insbesondere denkbar, dass als lokale Materialanhäufungen Funktionselemente, insbesondere Anschraubpunkte, Nasen, Haken, Zapfen, Verzahnungen, Rippen, Verdickungen, Federelemente, Anbauteile oder dgl. Funktionselemente an der Oberfläche des herzustellenden Bauteils angeordnet werden.

In einer weiteren Ausgestaltung ist es denkbar, dass als spanende Nachbearbeitung der lokalen Materialanhäufungen oder der umgeformten blechförmigen Abschnitte des Bauteils Fräsen, Bohren, Gewindeschneiden oder dgl. herkömmliche spanende Verfahren zum Einsatz kommen. Selbstverständlich ist die vorstehende Aufzählung nicht abschließend gemeint und kann durch weitere spanende oder artverwandte Bearbeitungen erweitert werden.

In einer anderen Ausgestaltung ist es denkbar, dass als umformende Nachbearbeitung der lokalen Materialanhäufungen ein Glattwalzen oder Festwalzen der Oberfläche der Materialanhäufungen und/oder der Übergangsbereiche (Fügestellen) zur Glättung der rauen additiv hergestellten Oberflächen durchgeführt wird. Hierdurch wird erreicht, dass die relativ raue Oberfläche der additiv hergestellten Materialanhäufungen zum einen geglättet wird, gleichzeitig aber auch verfestigt und damit mechanisch stabilisiert werden kann, wenn etwa die Eigenschaften des additiv aufgebrachten Materials eine Kaltverfestigung durch das Walzen ermöglichen. Denkbar ist es im Rahmen der vorliegenden Erfindung selbstverständlich auch, dass neben dem Glattwalzen oder Festwalzen andere umformende Bearbeitungen durchgeführt werden, etwa auch das Verwenden der inkrementell umformenden Bearbeitungswerkzeuge selbst für das Glätten oder Festwalzen.

Erfindungsgemäß werden die Werkzeuge für die inkrementelle Blechumformung, das additive Verfahren sowie die spanende und/oder umformende Nachbearbeitung zeitlich nacheinander in einen gemeinsamen Bearbeitungskopf eingewechselt, der die benötigten Bewegungen für die Bearbeitung mit dem jeweiligen Werkzeug ausführt. Hierbei ist der Bearbeitungskopf derart auszulegen, dass er die jeweiligen Werkzeuge aufnehmen und bestimmungsgemäß für jedes Bearbeitungsverfahren bewegen kann. Dieser eine Bearbeitungskopf bedingt dann aber, dass die einzelnen Bearbeitungen zeitlich nacheinander ausgeführt werden müssen. Die Abfolge der Bearbeitungsprozesse kann dabei so gewählt werden, dass Unzugänglichkeiten einzelner Bearbeitungsstellen vermieden werden. Hierzu sind Bearbeitungsschritte ggf. zu unterbrechen und zunächst andere Bearbeitungen durchzuführen.

In einer anderen Ausgestaltung ist es aber auch denkbar, dass für mehr als ein Bearbeitungswerkzeug jeweils ein separat bewegbarer Bearbeitungskopf vorgesehen wird, so dass die jeweils in die Bearbeitungsköpfe eingesetzten Bearbeitungswerkzeuge zeitgleich an insbesondere unterschiedlichen Abschnitten des herzustellenden Bauteils ihre Bearbeitungsoperationen ausführen können. Hierdurch kann die Gesamtbearbeitungszeit deutlich reduziert werden, da die einzelnen Bearbeitungen zeitlich überlappend durchgeführt werden können. Gleichzeitig ist aber der Aufwand für die Bewegungssteuerung derartiger mehrerer Bearbeitungsköpfe aufgrund der Kollisionsproblematik höher.

In einer Weiterbildung kann das additive Aufbringen der Materialanhäufung derart erfolgen, dass das blechförmige Ausgangsmaterial mit der darauf, vorzugsweise in im wesentlichen ebener Form, angeordneten Materialanhäufung anschließend im Bereich der Materialanhäufung gemeinsam inkrementell umgeformt wird. Hierbei wird schon vor der Umformung des blechförmigen Ausgangsmaterials eine lokale Materialhäufung vorgenommen, vorzugsweise in der Art, dass sich die Umformbarkeit des blechartigen Ausgangsmaterials erhalten lässt, insbesondere z.B. in Form einer im wesentlichen ebenen Beschichtung oder dgl.. Erst danach wird dann das so bereichsweise verstärkte blechförmige Ausgangsmaterial inkrementell umgeformt und damit die gewünschte Fertigteilform hergestellt.

Erfindungsgemäß werden die Materialeigenschaften der additiv aufgebrachten Materialanhäufungen, insbesondere deren Duktilität, derart eingestellt, dass das Material der Materialanhäufungen mittels inkrementeller Umformung gut umformbar ist. In anderer Ausgestaltung ist es auch denkbar, dass die Materialeigenschaften der additiv aufgebrachten Materialanhäufungen, insbesondere deren Duktilität, derart eingestellt werden, dass sich die gewünschten Materialeigenschaften im Bereich der Materialanhäufungen erst durch die inkrementelle Umformung, insbesondere durch Kaltverfestigung während der inkrementellen Umformung einstellt. Bei dieser Möglichkeit wird die inkrementelle Umformung gezielt dazu genutzt, die Materialeigenschaften des herzustellenden Bauteils lokal zu beeinflussen und z.B. eine verschleißärmere Oberfläche des Bauteils im Bereich der inkrementell umgeformten Bereiche der Materialanhäufungen zu erreichen.

Grundsätzlich ist es denkbar, dass als Material für die Materialanhäufung artgleiche Materialien wie das Material des blechförmigen Ausgangsmaterials verwendet werden. Hierdurch bilden das blechförmige Ausgangsmaterial und das Material für die Materialanhäufung einen Verbund mit im wesentlichen gleichen Eigenschaften und das Material für die Materialanhäufung verstärkt artgleich das blechförmige Ausgangsmaterial genau da, wo Belastungen oder Funktion dies erforderlich machen.

In einer anderen Ausgestaltung ist es aber auch denkbar, dass als Material für die Materialanhäufung zu dem Material des blechförmigen Ausgangsmaterials ungleichartige Materialien verwendet werden, z.B. dass andere Legierungszusammensetzungen oder auch gänzlich andere Materialien auf das blechförmige Ausgangsmaterial aufgebracht werden. So wären Beschichtungen eines z.B. aus Stahl gebildeten blechförmigen Ausgangsmaterials mit z.B. chemisch resistenteren Werkstoffen oder elektrisch anders leitfähigen Werkstoffen vorstellbar, aus denen die Materialien für die Materialanhäufung bestehen können.

Ebenfalls ist es denkbar, als Material für die Materialanhäufung zwei oder mehrere, insbesondere pulverartige Materialien zu verwenden, deren jeweiliges Mischungsverhältnis während des Aufbringens variiert werden kann. Hierdurch kann während des Aufbringens des Materials für die Materialanhäufung das Mischungsverhältnis der zwei oder mehreren Materialien z.B. in Form eines Gradienten beeinflusst werden und damit ein Verlauf der Eigenschaften des Materials für die Materialanhäufung in Dickenrichtung oder auch relativ zur Beschichtungsfläche geändert werden.

Von besonderem Vorteil ist es, wenn das blechförmige Ausgangsmaterial als ebenes Blech ausgestaltet wird und erst durch die inkrementelle Umformung in eine dreidimensional gekrümmte Form des herzustellenden Bauteils umgeformt wird. In weiterer Ausgestaltung ist es aber auch möglich, dass das blechförmige Ausgangsmaterial selbst vorab mittels additiver Verfahren und insbesondere auch auf der gleichen Fertigungseinrichtung wie für die spätere inkrementelle Umformung hergestellt wird. Selbstverständlich kann das blechförmige Ausgangsmaterial aber auch eine vorab hergestellte, zumindest bereichsweise nicht ebene Formgebung aufweisen, die z.B. durch eine herkömmliche Fertigung mittels bekannter Umformverfahren hergestellt wird. Die inkrementelle Umformung kann dann dazu genutzt werden, die Form des Werkstücks genau heraus zu arbeiten oder auch um Umformungen vorzunehmen, die auf herkömmliche Art nicht oder nur aufwändig herzustellen sind.

Die Erfindung betrifft weiterhin eine Vorrichtung zur Herstellung von Bauteilen mittels inkrementeller Blechumformung und additiver Verfahren, insbesondere mittels Laserauftragsschweißen, bei der die Vorrichtung eine Aufnahme zur Halterung eines blechförmigen Ausgangsmaterials und Werkzeuge zur zeitgleichen oder zeitlich versetzten Durchführung von Umformungen des blechförmigen Ausgangsmaterials mittels inkrementeller Blechumformung und des Aufbringens lokaler Materialanhäufungen an dem blechförmigen Ausgangsmaterial mittels additiver Verfahren in der gleichen Aufspannung auf der Vorrichtung aufweist. Durch die Kombination der an sich bekannten Herstellungsverfahren der inkrementellen Blechumformung und eines additiven Herstellverfahrens in einer Maschine lassen sich die Vorzüge beider Herstellverfahren kombinieren und erweitern das Produktionsspektrum und die Einsetzbarkeit derart hergestellter Werkstücke. Auch erhöht sich die Wirtschaftlichkeit und die Bauteilgenauigkeit entscheidend, da die Herstellung der Bauteile in einer Aufspannung die Nebenzeiten und die Fehlermöglichkeiten deutlich reduziert. Auch wird die Fertigungsgenauigkeit erhöht, da die sonst notwendigen Umspannungen zwischen seriell verschalteten einzelnen Maschinen und damit Lage- und Positionierungsfehler vermieden werden.

In weiterer Ausgestaltung kann die Vorrichtung eine Anzahl unabhängig voneinander bewegbarer Bewegungsachsen aufweisen, vorzugsweise drei translatorische und zwei rotatorische Achsen, mit denen eine Relativbewegung zwischen dem oder jedem der Bearbeitungswerkzeuge und dem blechförmigen Ausgangsmaterial erzeugbar ist. Hierdurch kann das oder können die jeweils im Eingriff befindlichen Werkzeuge nacheinander bzw. zeitgleich entsprechend der geforderten Bewegungscharakteristik für die jeweilige Bearbeitung gesteuert werden, wobei bei gleichzeitiger Bewegung entsprechende Kollisionsüberwachungen gemacht werden müssen.

Weiterhin kann vorgesehen werden, dass für die umformende Nachbearbeitung der lokalen Materialanhäufungen mindestens eine insbesondere hydrostatisch gelagerte, Druckrolle in der Vorrichtung angeordnet ist. Diese Druckrolle oder eine äquivalent wirkende andere Druckeinrichtung kann dazu genutzt werden, die üblicherweise recht rauen Oberflächen der Bereiche mit den Materialanhäufungen zu glätten und gleichzeitig zu verfestigen. Hierfür wird diese Druckrolle bahnenartig die Bereiche mit den Materialanhäufungen abfahren und dabei glätten.

Weiterhin kann vorgesehen werden, dass für die spanende Nachbearbeitung der lokalen Materialanhäufungen mindestens ein Zerspanungswerkzeug in der Vorrichtung angeordnet ist. So kann etwa ein Fräser oder ein Bohrer oder ein sonstiges zerspanendes Werkzeug eine spanende Nachbearbeitung von Oberflächenteilen des herzustellenden Bauteils nach der additiven Herstellung bzw. auch der inkrementellen Umformung vornehmen, z.B. um Passgenauigkeiten zu gewährleisten oder Oberflächen nachzuarbeiten.

Bei dem Einsatz der Zerspanungswerkzeuge sowie der Umform- bzw. Walzwerkzeuge können selbstverständlich (Kühl-)Schmierstoffe Verwendung finden, um die Bearbeitung zu vereinfachen. Die additive Herstellung der Materialanhäufungen kann ebenfalls unter Zugabe von Schutzgas bzw. in einer Schutzgasatmosphäre erfolgen.

Erfindungsgemäß sind die Werkzeuge für die inkrementelle Blechumformung, das additive Verfahren sowie die spanende und/oder umformende Nachbearbeitung nacheinander in einen gemeinsamen Bearbeitungskopf einwechselbar, der die benötigten Bewegungen mit dem jeweiligen Werkzeug ausführt. Hierbei wird eine serielle Abfolge einzelner Bearbeitung erreicht, wobei die Einwechslung vorteilhaft automatisch aus einem Werkzeugmagazin erfolgen kann. Die Abfolge der Bearbeitungsprozesse kann dabei so gewählt werden, dass Unzugänglichkeiten einzelner Bearbeitungsstellen vermieden werden. Hierzu sind Bearbeitungsschritte ggf. zu unterbrechen und zunächst andere Bearbeitungen durchzuführen.

In anderer Ausgestaltung kann für mehr als ein Bearbeitungswerkzeug jeweils ein separat bewegbarer Bearbeitungskopf vorgesehen ist, so dass die jeweils eingewechselten Bearbeitungswerkzeuge zeitgleich an insbesondere unterschiedlichen Abschnitten des herzustellenden Bauteils ihre Bearbeitungsoperationen ausführen können. Dies verkürzt die Hauptzeiten bei der Herstellung des Bauteils und erlaubt auch kombinierte Bearbeitungen des Bauteils.

Denkbar ist es weiterhin, dass die Werkzeuge für die inkrementelle Blechumformung, das additive Verfahren sowie die spanende und/oder umformende Nachbearbeitung in einem Werkzeugmagazin ablegbar und daraus entnehmbar sind.

In weiterer Ausgestaltung können auch mehr als ein Bearbeitungswerkzeug gleichzeitig für die inkrementelle Blechumformung des herzustellenden Bauteils bewegbar sein, wie dies etwa in der Patentanmeldung DE 10 2009 025 726 derselben Anmelderin beschrieben ist. Auch die anderen Werkzeuge können gleichzeitig mehrfach vorgesehen sein und parallele Bearbeitungen vornehmen.

Eine besonders bevorzugte Ausführungsform der erfindungsgemäßen Vorrichtung zeigt die Zeichnung.

Es zeigen:
- Figur 1: - eine beispielhafte Ausgestaltung der erfindungsgemäßen Vorrichtung mit einem im Eingriff mit einem blechartigen, schon teilverformten Ausgangsmaterial befindlichen Werkzeug zur inkrementellen Blechverformung sowie in einem Werkzeugmagazin angeordneten weiteren Werkzeugen zur Durchführung additiver Verfahren sowie zum Walzen und zum Zerspanen,
- Figur 2: - die Ausgestaltung der erfindungsgemäßen Vorrichtung gemäß Figur 1 mit einem im Eingriff mit dem blechartigen, schon teilverformten Ausgangsmaterial befindlichen Werkzeug zur Durchführung additiver Verfahren,
- Figur 3: - die Ausgestaltung der erfindungsgemäßen Vorrichtung gemäß Figur 1 mit zeitlich gleichzeitigem Eingriff des Werkzeugs zur inkrementellen Blechverformung und des Werkzeugs zur Anbringung von lokalen Materialanhäufungen mittels additiver Verfahren an unterschiedlichen Abschnitten des schon teilverformten Ausgangsmaterials,
- Figur 4: - die Ausgestaltung der erfindungsgemäßen Vorrichtung gemäß Figur 1 mit einem im Eingriff mit der lokalen Materialanhäufung gemäß Figur 2 befindlichen Werkzeug zum Oberflächenwalzen der lokalen Materialanhäufung,
- Figur 5: - die Ausgestaltung der erfindungsgemäßen Vorrichtung gemäß Figur 1 mit einem im Eingriff mit der lokalen Materialanhäufung gemäß Figur 2 befindlichen Werkzeug zum Zerspanen an der lokalen Materialanhäufung,
- Figur 6: - eine beispielhafte und schematische Ausgestaltung eines erfindungsgemäß herstellbaren Bauteils aus einem in wesentlichen blechförmigen Ausgangsmaterial und daran angeordneten Materialanhäufungen zur Erzeugung von verschiedenen Funktionselementen.

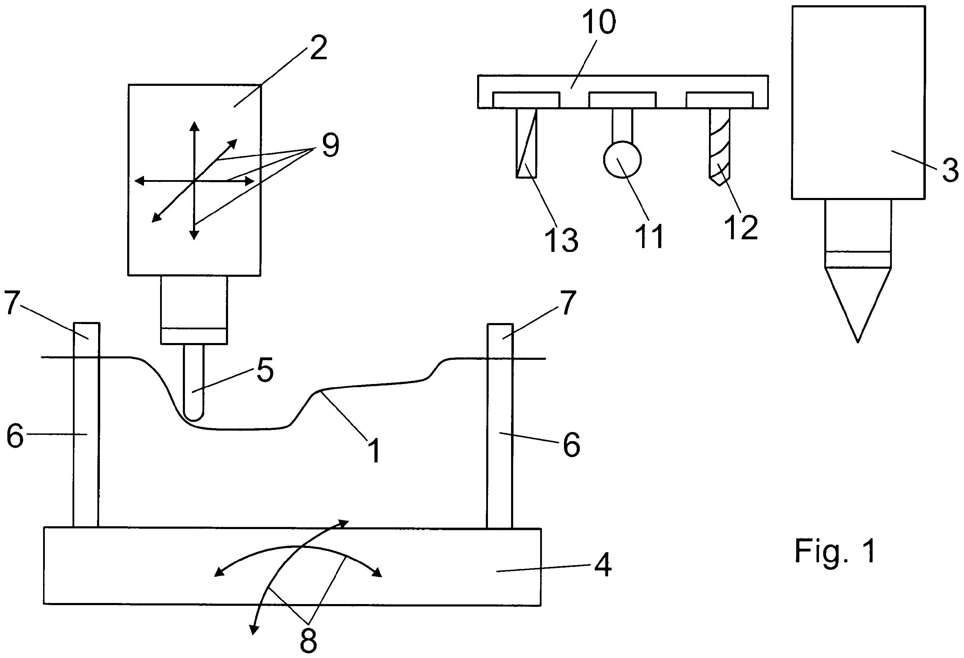

In der Figur 1 ist eine beispielhafte Ausgestaltung der erfindungsgemäßen Vorrichtung mit einem nur schematisch angedeuteten Werkzeug 5 zur inkrementellen Blechverformung sowie einem in einem Werkzeugmagazin 10 angeordneten weiteren, nur schematisch angedeuteten Werkzeug 3 zur Durchführung additiver Verfahren sowie Werkzeugen zum Walzen 11 und zum Zerspanen 12, 13 dargestellt. Das Werkzeug 5 zur inkrementellen Blechverformung befindet sich im Eingriff mit einem blechartigen, schon teilverformten Ausgangsmaterial 1.

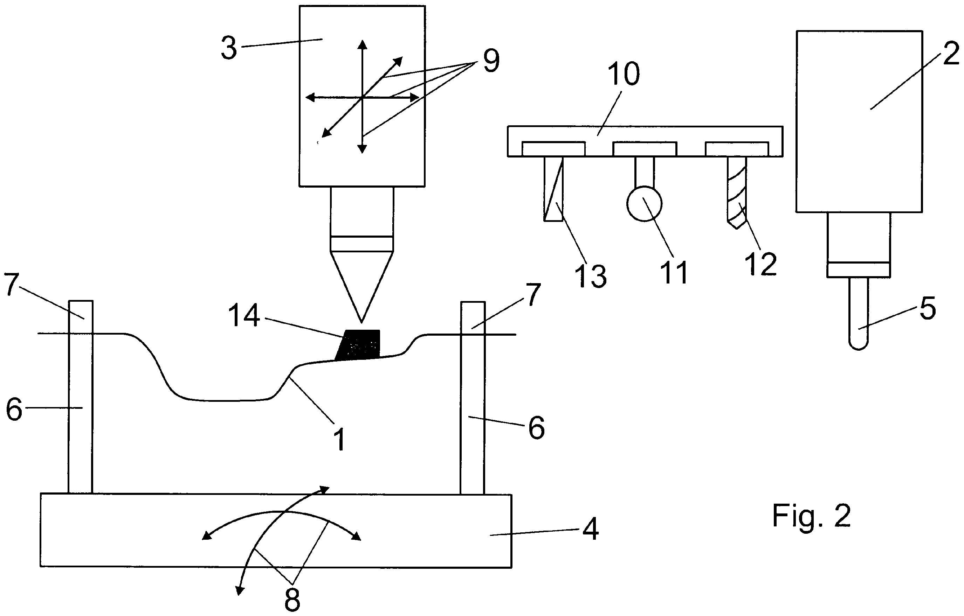

Ein z.B. rotationsymmetrisches oder nicht rotationssymmetrisches und etwa schalenförmiges Bauteil wird in der Vorrichtung mittels des Werkzeuges 5 zur inkrementellen Blechverformung in Form eines Drückstichels auf einem um die Bewegungsachsen 8, 9 schwenk- und rotierbaren Maschinentisch 4 aus einem blechartigen Ausgangsmaterial 1 in grundsätzlich bekannter Weise sukzessive durch inkrementelle Blechumformung gefertigt. Das Werkzeug 5 zur inkrementellen Blechverformung ist in einem Werkzeugkopf 2 gehaltert und um die drei senkrecht zueinander stehenden Bewegungsachsen 9 relativ zu dem Maschinentisch 4 und damit zu dem blechartigen Ausgangsmaterial 1 dreidimensional verfahrbar. Das blechförmige Ausgangsmaterial 1 ist dabei auf einer nur angedeuteten Auflage 6 aufgelegt und durch einen Spannrahmen 7 umlaufend unter Andruck auf der Auflage 6 gehalten. Im Bewegungsbereich des Werkzeugkopfes 2 ist ein seitlich angeordnetes Werkzeugmagazin 10 schematisch angedeutet, in dem z.B. ein Werkzeug 11 zum Glattwalzen, ein Bohrwerkzeug 12 und ein Fräswerkzeug 13 aufgenommen sind, die in den Bearbeitungskopf 2 eingewechselt werden können. Ebenfalls kann der Bearbeitungskopf 2 mit dem Werkzeug 5 zur inkrementellen Blechverformung gegen das ebenfalls an dem Werkzeugmagazin angeordnete Werkzeug 3 zur Durchführung additiver Verfahren ausgewechselt werden, wie dies aus der Figur 2 zu entnehmen ist.

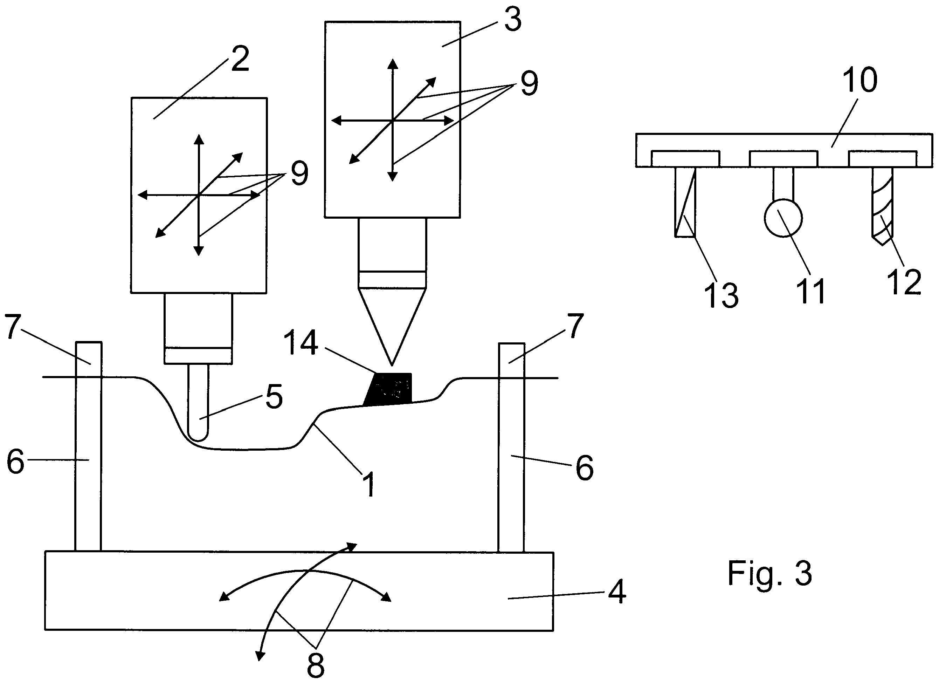

Eine solche erfindungsgemäße Vorrichtung kann z.B. mit einem 5-Achs-Bearbeitungszentrum realisiert werden, welches an der Werkzeugaufnahme 2 in Form einer Spindel als Werkzeuge einen Drückstichel 5, eine Düse 3 zum Pulverauftragsschweißen, ein Fräs-/Bohrwerkzeug 12, 13 und ein (Fest-)Walzwerkzeug 11 automatisch aufnehmen kann. Auch ist denkbar, dass bei Einsatz einer zweiten unabhängig von der ersten Werkzeugaufnahme bewegbaren Werkzeugaufnahme das Werkzeug 5 zur inkrementellen Blechverformung und das Werkzeug 3 zur Durchführung additiver Verfahren auch parallel betrieben werden können, wie dies in der Figur 3 angedeutet ist. Hierbei sind das Werkzeug 5 zur inkrementellen Blechverformung und das Werkzeug 3 zur Durchführung additiver Verfahren jeweils um Bewegungsachsen 9 voneinander unabhängig frei beweglich angeordnet und können z.B. an unterschiedlichen Bereichen des blechartigen Ausgangsmaterials 1 gleichzeitig arbeiten. Hierbei müssen Kollisionen zwischen dem Werkzeug 5 zur inkrementellen Blechverformung und dem Werkzeug 3 zur Durchführung additiver Verfahren bzw. den entsprechenden Bearbeitungsköpfen ausgeschlossen werden.

Das Werkzeug 3 zur Durchführung additiver Verfahren wird in grundsätzlich bekannter Weise wie z.B. beim Laserpulverauftragsschweißen zur Aufbringung von z.B. lokalen Materialanhäufungen 14 auf dem blechförmigen Ausgangsmaterial 1 benutzt, die einmal Verstärkungsfunktion haben können, vornehmlich aber als Funktionsbauteile an einem späteren Bauteil 21 dienen. Derartige Funktionsbauteile kommen häufig an Blechbauteilen als sog. Nebenformelementen vor. Geometrische Features wie Nasen, Haken, Anschraubpunkte 15, 20, Zapfen 17, Federelemente 18, Verzahnungen, Rippen 16, 19, Verdickungen bzw. allgemein Funktionselemente werden aufgrund funktionaler Anforderungen oder aufgrund konstruktiver Gegebenheiten vielfach an aus Blech herstellbaren Bauteilen benötigt und können erfindungsgemäß an dem blechförmige Ausgangsmaterial 1 z.B. durch Laserpulverauftragsschweißen lokal in der gleichen Vorrichtung und der gleichen Aufspannung wie für die inkrementelle Umformung aufgebaut werden. Hierdurch kann eine sehr zielgerichtete Gestaltung des Blechbauteiles erreicht werden, die wegen des hauptsächlichen Aufbaus aus einem Blechrohling relativ leichtgewichtig erfolgen kann und gleichwohl die Materialansammlungen 14 als Verstärkungen bzw. Formelemente aufweist, wo diese benötigt werden. Die Herstellung dieser Materialansammlungen 14 durch additive Verfahren ermöglicht viel Gestaltungsfreiheit und eine einfachere und genauere Fertigung dieser Funktionsbauteile als auf herkömmlichem Wege mittels z.B. Schweißverfahren.

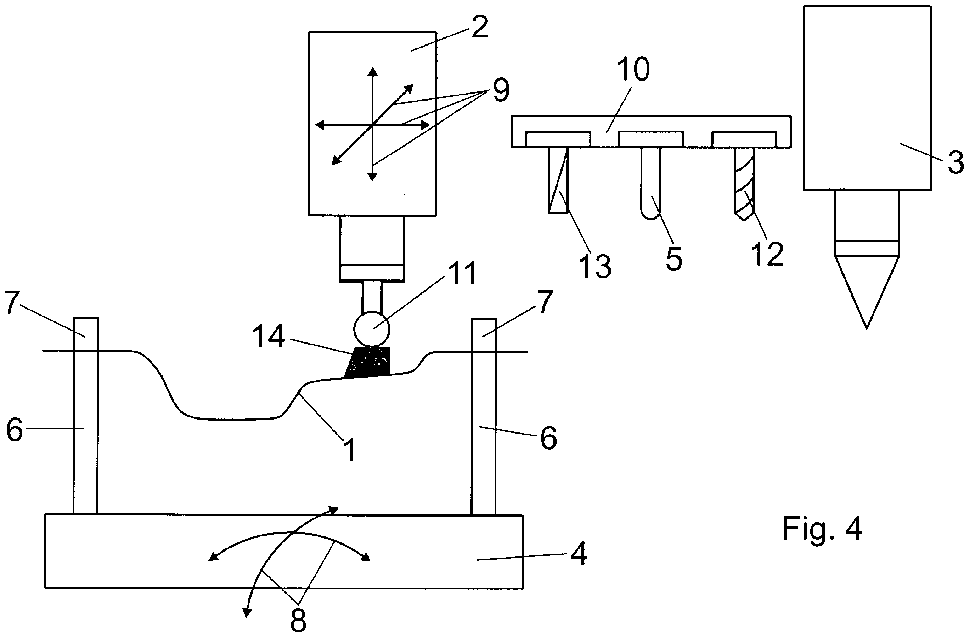

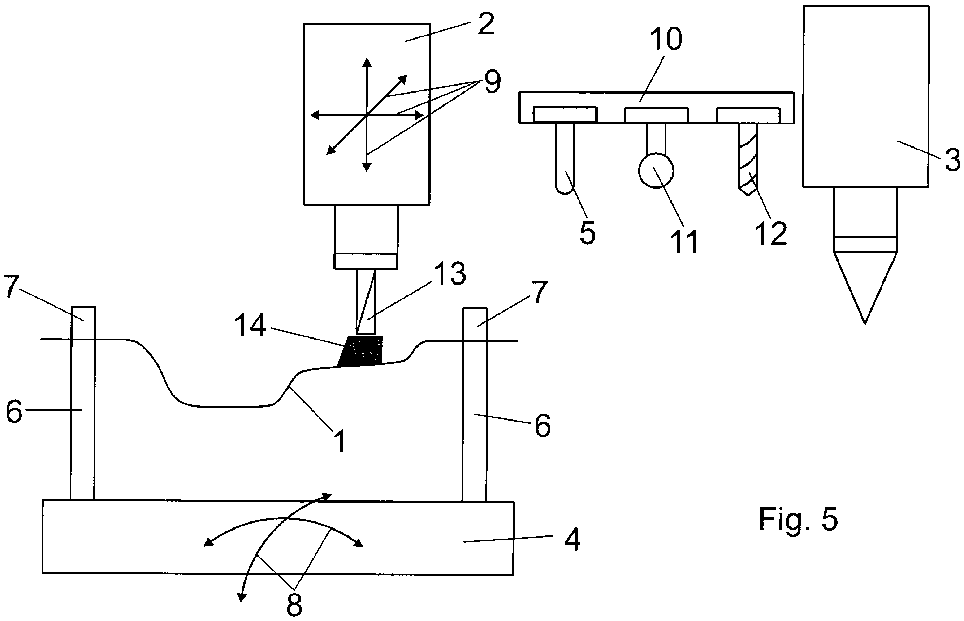

Hierbei können die Materialansammlungen 14 wie in den Figuren 4 und 5 erkennbar auch in der gleichen Aufspannung in derselben Vorrichtung umformend oder spanend nachbearbeitet werden, indem wie in Figur 4 erkennbar das Werkzeug 11 zum Glattwalzen in den Bearbeitungskopf 2 eingewechselt wird und die zu glättende Oberfläche der Materialansammlung 14 abfährt und oberflächlich glättet oder indem wie in Figur 5 erkennbar das Werkzeug 13 zum Fräsen die Oberfläche der Materialansammlung 14 glatt und maßhaltig fräst. Derartige umformende oder spanende Bearbeitungen können natürlich sehr verschieden und mit verschiedenen Werkzeugen ausgeführt werden, so dass die beiden Bearbeitungen gemäß Figur 4 und 5 nur rein exemplarisch genannt angesehen werden sollen.

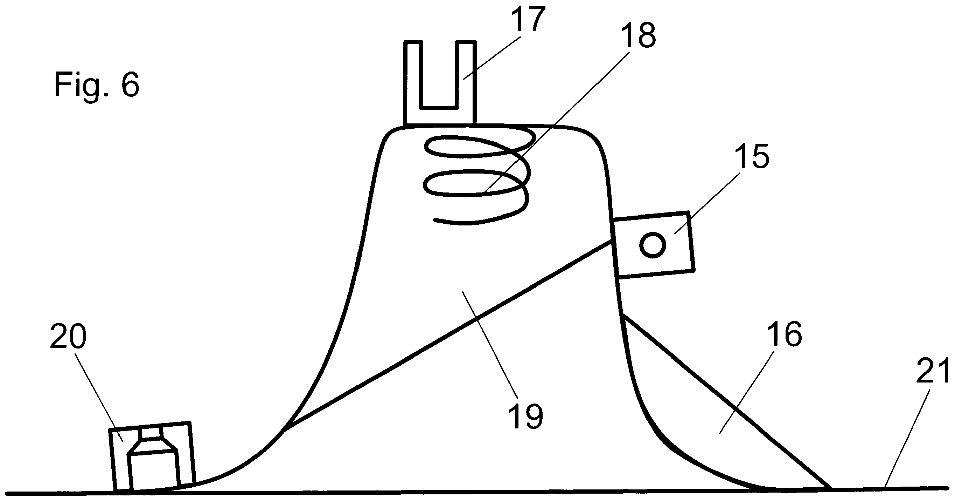

In der Figur 6 sind an einem topfartig verformten Blechbauteil 21 angeordnet ebenfalls nur exemplarisch eine Reihe von denkbaren Funktionselementen wie ein Anschraubauge 15, eine äußere Verstärkungsrippe 16, eine Anschraubgabel 17, ein Federelement 18, eine innere Verstärkungsrippe 19 oder ein Gewindeauge 20 dargestellt, die die Funktion des Blechbauteils 21 erforderlich machen könnten und die auf der erfindungsgemäßen Vorrichtung mit dem erfindungsgemäßen Verfahren hergestellt werden könnten.

### Sachnummernliste

- 1: - blechförmiges Ausgangsmaterial
- 2: - Bearbeitungskopf
- 3: - Werkzeug zur additiven Bearbeitung
- 4: - Maschinentisch
- 5: - Werkzeug zur inkrementellen Umformung
- 6: - Auflage für blechförmiges Ausgangsmaterial
- 7: - Spannrahmen blechförmiges Ausgangsmaterial
- 8: - Bewegungsachsen Maschinentisch
- 9: - Bewegungsachsen Bearbeitungskopf
- 10: - Werkzeugmagazin
- 11: - Werkzeug zum Walzen
- 12: - Werkzeug zum Bohren
- 13: - Werkzeug zum Fräsen
- 14: - Materialanhäufung
- 15: - Anschraubauge
- 16: - Verstärkungsrippe
- 17: - Anschraubgabel
- 18: - Federelement
- 19: - innere Verstärkungsrippe
- 20: - Gewindeauge
- 21: - verformtes und im wesentlichen blechförmiges Bauteil

## Patentansprüche

1. Verfahren zur Herstellung von Bauteilen (21) mittels inkrementeller Blechumformung und additiver Verfahren, insbesondere mittels Laserauftragsschweißen,
**dadurch gekennzeichnet, dass**
das Bauteil (21) ausgehend von einem blechförmigen Ausgangsmaterial (1) mittels inkrementeller Blechumformung (5) zumindest lokal in eine verformte Fertigteilgeometrie gebracht wird,
vor und/oder währenddessen mittels additiver Verfahren (3), insbesondere mittels Laserauftragsschweißen, zumindest lokal Materialanhäufungen (14) an dem blechförmigen Ausgangsmaterial (1) und/oder an der verformten Fertig teilgeometrie in derselben Aufspannung des Bauteils (21) angebracht und/oder mit dieser verbunden werden,
wobei die Materialeigenschaften der additiv aufgebrachten Materialanhäufungen (14), insbesondere deren Duktilität, derart eingestellt werden, dass sich die gewünschten Materialeigenschaften im Bereich der Materialanhäufungen (14) erst durch die inkrementelle Umformung (5), insbesondere durch Kaltverfestigung während der inkrementellen Umformung (5) einstellt.

2. Verfahren gemäß Anspruch 1, **dadurch gekennzeichnet, dass** vor und/oder während und/oder anschließend zu der Anwendung additiver Verfahren (3) an dem blechförmigen Ausgangsmaterial (1) eine spanende und/oder umformende Nachbearbeitung der lokalen Materialanhäufungen (14), insbesondere zur Erhöhung Maß- und Formgenauigkeit der lokalen Materialanhäufungen (14), oder der umgeformten blechförmigen Abschnitte des Bauteils (21) durchgeführt wird.

3. Verfahren gemäß Anspruch 1, **dadurch gekennzeichnet, dass** die lokalen Materialanhäufungen (14) als Funktions- und/oder Formelemente an der Oberfläche des blechförmigen Ausgangsmaterials (1) und/oder an der verformten Fertigteilgeometrie des herzustellenden Bauteils (21) angeordnet werden

4. Verfahren gemäß Anspruch 1, **dadurch gekennzeichnet, dass** als lokale Materialanhäufungen (14) Funktionselemente, insbesondere Anschraubpunkte (15, 17, 20), Nasen, Haken, Zapfen, Verzahnungen, Rippen (16, 19), Verdickungen, Federelemente (18), Anbauteile oder dgl. Funktionselemente an der Oberfläche des herzustellenden Bauteils (21) angeordnet werden.

5. Verfahren gemäß Anspruch 1, **dadurch gekennzeichnet, dass** als spanende Nachbearbeitung der lokalen Materialanhäufungen (14) oder der umgeformten blechförmigen Abschnitte des Bauteils (21) Fräsen (13), Bohren (12), Gewindeschneiden oder dgl. herkömmliche spanende Verfahren durchgeführt werden.

6. Verfahren gemäß Anspruch 1, **dadurch gekennzeichnet, dass** als umformende Nachbearbeitung der lokalen Materialanhäufungen (14) ein Glattwalzen (11) oder Festwalzen der Oberfläche der Materialanhäufungen (14) zur Glättung der rauen additiv hergestellten Oberflächen durchgeführt wird.

7. Verfahren gemäß Anspruch 1, **dadurch gekennzeichnet, dass** die Werkzeuge (5) für die inkrementelle Blechumformung, das additive Verfahren (3) sowie die spanende und/oder umformende Nachbearbeitung (11, 12, 13) zeitlich nacheinander in einen gemeinsamen Bearbeitungskopf (2) eingewechselt werden, der die benötigten Bewegungen für die Bearbeitung mit dem jeweiligen Werkzeug (3, 5, 11, 12, 13) ausführt.

8. Verfahren gemäß Anspruch 1, **dadurch gekennzeichnet, dass** für mehr als ein Bearbeitungswerkzeug (3, 5, 11, 12, 13) jeweils ein separat bewegbarer Bearbeitungskopf (2) vorgesehen wird, so dass die jeweils in die Bearbeitungsköpfe (2) eingesetzten Bearbeitungswerkzeuge (3, 5, 11, 12, 13) zeitgleich an insbesondere unterschiedlichen Abschnitten des herzustellenden Bauteils (21) ihre Bearbeitungsoperationen ausführen können.

9. Verfahren gemäß Anspruch 1, **dadurch gekennzeichnet, dass** das additive Aufbringen der Materialanhäufung (14) derart erfolgt, dass das blechförmige Ausgangsmaterial (1) mit der darauf, vorzugsweise in im wesentlichen ebener Form, angeordneten Materialanhäufung (14) anschließend im Bereich der Materialanhäufung (14) gemeinsam inkrementell umgeformt wird.

10. Verfahren gemäß Anspruch 1, **dadurch gekennzeichnet, dass** die Materialeigenschaften der additiv aufgebrachten Materialanhäufungen (14), insbesondere deren Duktilität, derart eingestellt werden, dass das Material der Materialanhäufungen (14) mittels inkrementeller Umformung (5) gut umformbar ist.

11. Verfahren gemäß Anspruch 1, **dadurch gekennzeichnet, dass** als Material für die Materialanhäufung (14) artgleiche Materialien wie das Material des blechförmigen Ausgangsmaterials (1) verwendet werden.

12. Verfahren gemäß Anspruch 1, **dadurch gekennzeichnet, dass** als Material für die Materialanhäufung (14) zu dem Material des blechförmigen Ausgangsmaterials (1) ungleichartige Materialien verwendet werden.

13. Verfahren gemäß Anspruch 1, **dadurch gekennzeichnet, dass** als Material für die Materialanhäufung (14) zwei oder mehrere, insbesondere pulverartige Materialien verwendet werden, deren jeweiliges Mischungsverhältnis während des Aufbringens variiert werden kann.

14. Verfahren gemäß Anspruch 1, **dadurch gekennzeichnet, dass** das blechförmige Ausgangsmaterial (1) als ebenes Blech ausgestaltet wird.

15. Verfahren gemäß Anspruch 1, **dadurch gekennzeichnet, dass** das blechförmige Ausgangsmaterial (1) selbst vorab mittels additiver Verfahren (3) hergestellt wird.

16. Verfahren gemäß Anspruch 1, **dadurch gekennzeichnet, dass** das blechförmige Ausgangsmaterial (1) eine vorab hergestellte, zumindest bereichsweise nicht ebene Formgebung aufweist.

17. Vorrichtung zur Herstellung von Bauteilen mittels inkrementeller Blechumformung (5) und additiver Verfahren (3), insbesondere mittels Laserauftragsschweißen zur Durchführung des Verfahrens nach Anspruch 1,
**dadurch gekennzeichnet, dass**
die Vorrichtung eine Aufnahme (6, 7) zur Halterung eines blechförmigen Ausgangsmaterials (1) und Werkzeuge (5) zur zeitgleichen oder zeitlich versetzten Durchführung von Umformungen des blechförmigen Ausgangsmaterials (1) mittels inkrementeller Blechumformung und zum Aufbringen lokaler Materialanhäufungen (14) an dem blechförmigen Ausgangsmaterial (1) mittels additiver Verfahren (3) in der gleichen Aufspannung auf der Vorrichtung aufweist und jeweils eines der Werkzeuge (5) für die inkrementelle Blechumformung, das additive Verfahren (3) oder die spanende und/oder umformende Nachbearbeitung (11, 12, 13) nacheinander in einen gemeinsamen Bearbeitungskopf (2) einwechselbar ist, der die benötigten Bewegungen nur mit dem jeweils eingewechselten Werkzeug (3, 5, 11, 12, 13) ausführt.

18. Vorrichtung gemäß Anspruch 17, **dadurch gekennzeichnet, dass** die Vorrichtung eine Anzahl unabhängig voneinander bewegbarer Bewegungsachsen (8, 9) aufweist, vorzugsweise drei translatorische Achsen (9) und zwei rotatorische Achsen (8) aufweist, mit denen eine Relativbewegung zwischen dem oder jedem der Bearbeitungswerkzeuge (5, 3) und dem blechförmigen Ausgangsmaterial (1) erzeugbar ist.

19. Vorrichtung gemäß einem der Ansprüche 17 oder 18, **dadurch gekennzeichnet, dass** für die umformende Nachbearbeitung (11) der lokalen Materialanhäufungen (14) mindestens eine, insbesondere hydrostatisch gelagerte, Druckrolle (11) in der Vorrichtung bewegbar angeordnet ist.

20. Vorrichtung gemäß einem der Ansprüche 17 bis 19, **dadurch gekennzeichnet, dass** für die spanende Nachbearbeitung der lokalen Materialanhäufungen (14) mindestens ein Zerspanungswerkzeug (12, 13) in der Vorrichtung bewegbar angeordnet ist.

21. Vorrichtung gemäß einem der Ansprüche 17 bis 20, **dadurch gekennzeichnet, dass** für mehr als ein Bearbeitungswerkzeug (3, 5, 11, 12, 13) jeweils ein separat bewegbarer Bearbeitungskopf (2) vorgesehen ist, so dass die jeweils eingewechselten Bearbeitungswerkzeuge (3, 5, 11, 12, 13) zeitgleich an insbesondere unterschiedlichen Abschnitten des herzustellenden Bauteils (21) ihre Bearbeitungsoperationen ausführen können.

22. Vorrichtung gemäß einem der Ansprüche 17 bis 21, **dadurch gekennzeichnet, dass** die Werkzeuge (5) für die inkrementelle Blechumformung, das additive Verfahren (3) sowie die spanende und/oder umformende Nachbearbeitung (11, 12, 13) in einem Werkzeugmagazin (10) ablegbar und daraus entnehmbar sind.

23. Vorrichtung gemäß einem der Ansprüche 17 bis 22, **dadurch gekennzeichnet, dass** mehr als ein Bearbeitungswerkzeug (5) gleichzeitig für die inkrementelle Blechumformung des herzustellenden Bauteils (21) bewegbar ist.

## Claims

1. Method for the combined production of components (21) by means of incremental sheet metal forming and additive methods, in particular by laser deposition welding,
**characterised in that**
the component (21), starting from a sheet-metal starting material (1), is brought at least locally into a deformed finished part geometry by means of incremental sheet-metal forming (5),
before and/or during which, by means of additive methods (3), in particular by means of laser deposition welding, material accumulations (14) are applied at least locally to the sheet-like starting material (1) and/or to the deformed finished part geometry in the same clamping of the component (21) and/or connected thereto,
wherein the material properties of the additively applied material accumulations (14), in particular their ductility, are adjusted in such a way that the desired material properties in the region of the material accumulations (14) are only achieved by the incremental forming (5), in particular by strain hardening during the incremental forming (5).

2. Method according to claim 1, **characterized in that** before and/or during and/or subsequent to the application of additive methods (3) to the sheet-like starting material (1) a metal-cutting and/or forming post-processing of the local material accumulations (14), in particular to increase the dimensional and shape accuracy of the local material accumulations (14), or of the formed sheet-like portions of the component (21), is carried out.

3. Method according to claim 1, **characterized in that** the local material accumulations (14) are arranged as functional and/or shaped elements on the surface of the sheet-like starting material (1) and/or on the deformed finished part geometry of the component (21) to be produced.

4. Method according to claim 1, **characterized in that** functional elements, in particular screw-on points (15, 17, 20), noses, hooks, pins, toothing, ribs (16, 19), enlargements, spring elements (18), add-on parts or the like functional elements, are arranged as local material accumulations (14) are arranged on the surface of the component (21) to be manufactured.

5. Method according to claim 1, **characterized in that** milling (13), drilling (12), thread cutting or the like conventional cutting methods are carried out as metal-cutting post-processing of the local material accumulations (14) or of the formed sheet metal-shaped sections of the component (21).

6. Method according to claim 1, **characterized in that** a press polishing (11) or finish rolling of the surface of the material accumulations (14) for smoothing the rough surfaces produced additively is carried out as deformation finishing of the local material accumulations (14).

7. Method according to claim 1, **characterized in that** the tools (5) for the incremental sheet metal forming, the additive method (3) as well as the cutting and/or forming post-processing (11, 12, 13) are changed in chronological succession into a common processing head (2) which executes the movements required for the processing with the respective tool (3, 5, 11, 12, 13).

8. Method according to claim 1, **characterised in that** for more than one machining tool (3, 5, 11, 12, 13) in each case a separately movable processing head (2) is provided, so that the machining tools (3, 5, 11, 12, 13) respectively inserted into the processing heads (2) can carry out their processing operations simultaneously, in particular at different sections of the component (21) to be produced.

9. Method according to claim 1, **characterized in that** the additive application of the material accumulation (14) takes place in such a way that the sheet-like starting material (1) with the material accumulation (14) arranged thereon, preferably in a substantially planar form, is subsequently formed together incrementally in the region of the material accumulation (14).

10. Method according to claim 1, **characterized in that** the material properties of the additively disposed material accumulations (14), in particular their ductility, are adjusted in such a way that the material of the material accumulations (14) can be easily formed by means of incremental forming (5).

11. Method according to claim 1, **characterized in that** materials of the same type as the material of the sheet-like starting material (1) are used as the material for the material accumulation (14).

12. Method according to claim 1, **characterized in that** dissimilar materials to the material of the sheet-like starting material (1) are used as material for the material accumulation (14).

13. Method according to claim 1, **characterized in that** two or more, in particular powder-like materials, whose respective mixing ratio can be varied during application, are used as material for the material accumulation (14).

14. Method according to claim 1, **characterized in that** the sheet-like starting material (1) is formed as a flat sheet.

15. Method according to claim 1, **characterized in that** the sheet-metal starting material (1) itself is produced in advance by means of additive methods (3).

16. Method according to claim 1, **characterized in that** the sheet-metal starting material (1) has a previously produced, at least regionally non-planar shaping.

17. Device for the production of components by means of incremental sheet metal forming (5) and additive methods (3), in particular by laser deposition welding, for carrying out the method according to claim 1,
**characterised in that**
the device has a receptacle (6, 7) for holding a sheet-like starting material (1) and tools (5) for carrying out simultaneous or time-shifted deformations of the sheet-like starting material (1) by means of incremental sheet metal deformation and for applying local accumulations of material (14) to the sheet-like starting material (1) by means of additive methods (3) in the same clamping on the device and each time one of the tools (5) for the incremental sheet metal deformation, the additive method (3) or the metal-cutting and/or forming finishing operation (11, 12, 13) can be successively changed into a common processing head (2) which executes the required movements only with the respectively changed-in tool (3, 5, 11, 12, 13).

18. Device according to claim 17, **characterized in that** the device has a number of independently movable movement axes (8, 9), preferably three translatory axes (9) and two rotary axes (8), with which a relative movement between the or each of the processing tools (5, 3) and the sheet-like starting material (1) can be produced.

19. Device according to one of the claims 17 or 18, **characterised in that** at least one, in particular hydrostatically mounted, pressure roller (11) is movably arranged in the device for the forming post-processing (11) of the local material accumulations (14).

20. Device according to one of the claims 17 to 19, **characterized in that** at least one cutting tool (12, 13) is movably arranged in the device for the cutting post-processing of the local material accumulations (14).

21. Device according to one of the claims 17 to 20, **characterised in that** for more than one machining tool (3, 5, 11, 12, 13) in each case a separately movable processing head (2) is provided, so that the respectively exchanged processing tools (3, 5, 11, 12, 13) can simultaneously carry out their processing operations in particular different sections of the component (21) to be produced.

22. Device according to one of the claims 17 to 21, **characterised in that** the tools (5) for incremental sheet metal forming, the additive method (3) as well as the cutting and/or forming finishing operation (11, 12, 13) can be stored in a tool magazine (10) and removed therefrom.

23. Device according to one of the claims 17 to 22, **characterized in that** more than one machining tool (5) can be moved simultaneously for the incremental sheet metal forming of the component (21) to be produced.

## Revendications

1. Procédé servant à fabriquer des composants (21) au moyen d'un façonnage de tôles incrémentiel et de procédés additifs, en particulier au moyen d'un soudage laser avec apport de matière,
**caractérisé en ce que**
le composant (21) est amené en partant d'un matériau de départ (1) en forme de tôle au moins localement dans une géométrie de pièce finie déformée au moyen d'un façonnage de tôles (5) incrémentiel,
avant et/ou pendant cela des accumulations de matériau (14) sont installées au moins localement au niveau du matériau de départ (1) en forme de tôle et/ou au niveau de la géométrie de pièce finie déformée dans la même passe du composant (21) et/ou sont reliées à celle-ci au moyen de procédés additifs (3), en particulier au moyen d'un soudage laser avec apport de matière,
dans lequel les propriétés de matériau des accumulations de matériau (14) appliquées de manière additive, en particulier leur ductilité, sont réglées de telle manière que les propriétés de matériau souhaitées se règlent dans la zone des accumulations de matériau (14) seulement par le façonnage (5) incrémentiel, en particulier par solidification à froid pendant le façonnage (5) incrémentiel.

2. Procédé selon la revendication 1, **caractérisé en ce qu'**avant et/ou pendant et/ou directement après la mise en oeuvre de procédés (3) additifs au niveau du matériau de départ (1) en forme de tôle, un usinage ultérieur par enlèvement de copeaux et/ou par façonnage des accumulations de matériau (14) locales, est effectué en particulier pour augmenter la précision en matière de dimensions et de formes des accumulations de matériau (14) locales ou des sections en forme de tôle façonnées du composant (21).

3. Procédé selon la revendication 1, **caractérisé en ce que** les accumulations de matériau (14) locales sont disposées en tant qu'éléments fonctionnels et/ou de forme au niveau de la surface du matériau de départ (1) en forme de tôle et/ou au niveau de la géométrie de pièce finie déformée du composant (21) à fabriquer.

4. Procédé selon la revendication 1, **caractérisé en ce que** sont disposés en tant qu'accumulations de matériau (14) locales des éléments fonctionnels, en particulier des points de vissage (15, 17, 20), des ergots, des crochets, des tourillons, des dentures, des nervures (16, 19), des zones épaissies, des éléments de ressort (18), des composants rapportés ou des éléments fonctionnels similaires, au niveau de la surface du composant (21) à fabriquer.

5. Procédé selon la revendication 1, **caractérisé en ce qu'**un fraisage (13), un perçage (12), un alésage ou des procédés d'enlèvement de copeaux classiques sont effectués en tant qu'usinage ultérieur par enlèvement de copeaux des accumulations de matériau (14) locales ou des sections en forme de tôle façonnées du composant (21).

6. Procédé selon la revendication 1, **caractérisé en ce qu'**un brunissage (11) ou un galetage de la surface des accumulations de matériau (14) sont effectués pour lisser les surfaces rugueuses fabriquées de manière additive en tant qu'usinage ultérieur par façonnage des accumulations de matériau (14) locales.

7. Procédé selon la revendication 1, **caractérisé en ce que** les outils (5) pour le façonnage de tôles incrémentiel, le procédé (3) additif ainsi que l'usinage ultérieur (11, 12, 13) par enlèvement de copeaux et/ou par façonnage peuvent être montés de manière interchangeable les uns après les autres dans le temps dans une tête d'usinage (2) commune, qui exécute les déplacements requis pour l'usinage avec l'outil (3, 5, 11, 12, 13) respectif.

8. Procédé selon la revendication 1, **caractérisé en ce que** pour plus d'un outil d'usinage (3, 5, 11, 12, 13), respectivement une tête d'usinage (2) pouvant être déplacée séparément est prévue, de sorte que les outils d'usinage (3, 5, 11, 12, 13) insérés dans les têtes d'usinage (2) peuvent exécuter dans le même temps au niveau de sections en particulier différentes du composant (21) à fabriquer leurs opérations d'usinage.

9. Procédé selon la revendication 1, **caractérisé en ce que** l'application additive de l'accumulation de matériau (14) est réalisée de telle manière que le matériau de départ (1) en forme de tôle avec l'accumulation de matériau (14) disposée sur celui-ci, de préférence sous une forme sensiblement plane, est façonné ensuite conjointement de manière incrémentielle dans la zone de l'accumulation de matériau (14).

10. Procédé selon la revendication 1, **caractérisé en ce que** les propriétés de matériau des accumulations de matériau (14) appliquées de manière additive, en particulier leur ductilité, sont réglées de telle manière que le matériau des accumulations de matériau (14) peut être façonné de manière satisfaisante au moyen d'un façonnage (5) incrémentiel.

11. Procédé selon la revendication 1, **caractérisé en ce que** sont utilisés en tant que matériau pour l'accumulation de matériau (14) des matériaux de type similaire au matériau du matériau de départ (1) en forme de tôle.

12. Procédé selon la revendication 1, **caractérisé en ce que** sont utilisés en tant que matériau pour l'accumulation de matériau (14) des matériaux de type différent par rapport au matériau du matériau de départ (1) en forme de tôle.

13. Procédé selon la revendication 1, **caractérisé en ce que** sont utilisés en tant que matériau pour l'accumulation de matériau (14), deux ou plusieurs matériaux en particulier pulvérulents, dont le rapport de mélange respectif peut varier pendant l'application.

14. Procédé selon la revendication 1, **caractérisé en ce que** le matériau de départ (1) en forme de tôle est configuré sous la forme d'une tôle plane.

15. Procédé selon la revendication 1, **caractérisé en ce que** le matériau de départ (1) en forme de tôle est fabriqué au préalable même au moyen de procédés (3) additifs.

16. Procédé selon la revendication 1, **caractérisé en ce que** le matériau de départ (1) en forme de tôle présente une mise en forme fabriquée au préalable, non plane au moins par endroits.

17. Dispositif servant à fabriquer des composants au moyen d'un façonnage de tôles (5) incrémentiel et de procédés (3) additifs, en particulier au moyen d'un soudage laser avec apport de matière afin d'effectuer le procédé selon la revendication 1,
**caractérisé en ce que**
le dispositif présente un logement (6, 7) servant à supporter un matériau de départ (1) en forme de tôle et des outils (5) servant à effectuer dans le même temps ou de manière décalée dans le temps des façonnages du matériau de départ (1) en forme de tôle au moyen d'un façonnage de tôles incrémentiel et servant à appliquer des accumulations de matériau (14) locales au niveau du matériau de départ (1) en forme de tôle au moyen de procédés (3) additifs dans la même passe sur le dispositif et respectivement un des outils (5) pour le façonnage de tôle incrémentiel, le procédé (3) additif ou l'usinage ultérieur (11, 12, 13) par enlèvement de copeaux et/ou par façonnage les uns après les autres peut être monté de manière interchangeable dans une tête d'usinage (2) commune, qui exécute les déplacements requis seulement avec l'outil (3, 5, 11, 12, 13) respectivement monté de manière interchangeable.

18. Dispositif selon la revendication 17, **caractérisé en ce que** le dispositif présente un nombre d'axes de déplacement (8, 9) pouvant être déplacés indépendamment les uns des autres, de préférence trois axes de translation (9) et deux axes de rotation (8), avec lesquels un déplacement relatif entre l'outil d'usinage ou chacun des outils d'usinage (5, 3) et le matériau de départ (1) en forme de tôle peut être généré.

19. Dispositif selon l'une quelconque des revendications 17 ou 18, **caractérisé en ce que** pour l'usinage ultérieur (11) par façonnage des accumulations de matériau (14) locales, au moins un rouleau de pression (11) monté en particulier de manière hydrostatique est disposé de manière à pouvoir être déplacé dans le dispositif.

20. Dispositif selon l'une quelconque des revendications 17 à 19, **caractérisé en ce que** pour l'usinage ultérieur par enlèvement de copeaux des accumulations de matériau (14) locales, au moins un outil d'enlèvement de copeaux (12, 13) est disposé de manière à pouvoir être déplacé dans le dispositif.

21. Dispositif selon l'une quelconque des revendications 17 à 20, **caractérisé en ce que** pour plus d'un outil d'usinage (3, 5, 11, 12, 13), respectivement une tête d'usinage (2) pouvant être déplacée séparément est prévue si bien que les outils d'usinage (3, 5, 11, 12, 13) respectivement montés de manière interchangeable peuvent exécuter dans le même temps au niveau de sections en particulier différentes du composant (21) à fabriquer leurs opérations d'usinage.

22. Dispositif selon l'une quelconque des revendications 17 à 21, **caractérisé en ce que** les outils (5) pour le façonnage de tôles incrémentiel, le procédé (3) additif ainsi que l'usinage ultérieur (11, 12, 13) par enlèvement de copeaux et/ou par façonnage peuvent être déposés dans un magasin à outils (10) et peuvent en être retirés.

23. Dispositif selon l'une quelconque des revendications 17 à 22, **caractérisé en ce que** plus d'un outil d'usinage (5) peut être déplacé simultanément pour le façonnage de tôles incrémentiel du composant (21) à fabriquer.
